# EUROPEAN PATENT APPLICATION

(11) **EP 1 400 817 A1**
(43) Date of publication of application: **24.03.2004**
(21) Application number: 03020960.5
(22) Date of filing: 16.09.2003
(51) Int. Cl.: G01T 1/29

(54) **Radiation image sensor and method of producing the same**

(30) Priority: 17.09.2002 JP 2002269723
(71) Applicant: Fuji Photo Film Co., Ltd., Kanagawa-ken (JP)
(72) Inventor: Arakawa, Satoshi, Ashigarakami-gun, Kanagawa-ken (JP)
(74) Representative: Klunker . Schmitt-Nilson . Hirsch

(57) **Abstract**

A radiation image sensor includes a radiation detector layer formed of radiation detector particles which generate electric charges upon exposure to recording radiation and are dispersed in a polymer, and an electric signal detector layer formed of detector elements each of which is formed on the surface of a plastic substrate for each pixel to detect the electric charges generated at the corresponding pixel in the radiation detector layer. The radiation detector layer and the electric signal detector layer are laminated one on the other.

## Description

### BACKGROUND OF THE INVENTION

### Field of the Invention

This invention relates to a radiation image sensor which detects radiation image information by detecting, as an electric signal, electric charges generated upon exposure to radiation, and a method of producing the same.

### Description of the Related Art

There has been put into practice in taking, for instance, a medical radiation image, a radiation image sensor which detects radiation image information by detecting, as an electric signal, electric charges generated upon exposure to radiation, and various types of radiation image sensors have been proposed.

There has been known a radiation image sensor which operates in a system where the radiation image sensor stores electric charges generated upon exposure to radiation and the stored electric charges are read out by turning on and off pixel by pixel electric switches such as comprising TFTs (thin film transistors. Such a system includes a direct conversion system and an indirect conversion system. In the direct conversion system, radiation is directly converted to electric charges and the electric charges are stored, and the radiation is detected generally by a-Se film. Whereas, in the indirect conversion system, radiation is once converted to light by a scintillator such as CsI and the light is converted to electric charges by, for instance, a-Si photodiodes.

Such radiation image sensors are mainly used in hospitals and the like. Accordingly, there has been a requirement that the radiation image sensor be highly portable, e.g., accommodated in a casing of a cassette, and highly resistant to impact so that the radiation image sensor is not broken even if it is accidentally dropped. The radiation image sensors are sometimes used outside the hospital e.g., for a periodical examination. In such a case, the requirement described above is enhanced.

See, for instance, "Proceeding of SPIE", (America), SPIE, 2001, vol. 4320, pp. 1 - 12, "Physics Medical Biology", (U.K. ) , IOP Publishing Ltd., 1997, vol. 42, pp.1 - 39, "Proceeding of SPIE", (America), SPIE, 2001, vol. 4320, pp. 140 - 147, and "Proceeding of SPIE", (America), SPIE, vol. 2708, pp. 499 - 510.

However, in the radiation image sensor described above, TFTs are formed on glass substrates since the TFTs are formed at an elevated temperature, and accordingly, TFTs are very apt to be broken, for instance, upon drop of the radiation image sensor. Further, in the radiation image sensor of the direct conversion system, a thick a-Se film is formed by vapor deposition on the surface of the glass substrate carrying thereon a TFT, and in the radiation image sensor of the indirect conversion system, an a-Si film is formed by vapor deposition on the surface of the glass substrate carrying thereon a TFT. The a-Se film and the a-Si film are very apt to be broken, for instance, upon drop of the radiation image sensor, increase the weight of the radiation image sensor and increase the production cost of the radiation image sensor.

### SUMMARY OF THE INVENTION

In view of the foregoing observations and description, the primary object of the present invention is to provide a radiation image sensor which is highly resistant to impact, light in weight and low in the production cost.

In accordance with a first aspect of the present invention, there is provided a radiation image sensor comprising a radiation detector layer formed of radiation detector particles which generate electric charges upon exposure to recording radiation and are dispersed in a polymer, and an electric signal detector layer formed of detector elements each of which is formed on the surface of a plastic substrate for each pixel to detect the electric charges generated at the corresponding pixel in the radiation detector layer, wherein the radiation detector layer and the electric signal detector layer are laminated one on the other.

The "detector element" may be, for instance, an element which comprises a TFT switch, a pixel capacity cell and a pixel electrode, and stores electric charges generated upon exposure to radiation in the pixel capacity cell and reads out the stored electric charges in the pixel capacity cell by turning on and off the TFT switch.

In accordance with a second aspect of the present invention, there is provided a radiation image sensor of the first aspect of the present invention in which the radiation detector layer and the electric signal detector layer are laminated one on the other by way of conductive resin film partitioned for respective pixels.

In accordance with a third aspect of the present invention, there is provided a method of producing a radiation image sensor in accordance with the first aspect of the present invention, comprising the step of forming the radiation detector layer by coating with dispersion of the radiation detector particles in polymer the side of the electric signal detector layer on which the detector elements are formed.

In accordance with a fourth aspect of the present invention, there is provided a method of producing a radiation image sensor in accordance with the second aspect of the present invention, comprising the steps of forming conductive resin film on each of the detector elements on the electric signal detector layer and laminating the electric signal detector layer provided with conductive resin film on each of the detector elements on the radiation detector layer.

As the conductive resin film, that provided with adhesion, for instance, by heat treatment may be employed.

Since being free from a glass substrate and deposited film, the radiation image sensor of the first or second aspect of the present invention is highly resistant to impact and less apt to be broken when dropped. Further, the radiation image sensor of the first or second aspect of the present invention can be light in weight and can be produced at low cost.

In accordance with the method of the third aspect of the present invention, the radiation detector layer can be more simply formed at lower cost.

In accordance with the method of the fourth aspect of the present invention, the radiation detector layer can be more simply formed at lower cost by, for instance, separately forming the radiation detector layer and the electric signal detector layer and laminating these layers by hot pressing.

### BRIEF DESCRIPTION OF THE DRAWINGS

Figure 1A is a perspective view showing the appearance of a radiation image sensor in accordance with a first embodiment of the present invention,
Figure 1B is fragmentary cross-sectional view of a part of the radiation image sensor shown in Figure 1A,
Figure 2 is a block diagram showing the radiation detector layer of the radiation image sensor shown in Figure 1A,
Figure 3 is a view similar to Figure 1B but showing a part of a radiation image sensor in accordance with a second embodiment of the present invention,
Figure 4 is a view similar to Figure 2 but showing a part of a radiation image sensor in accordance with a third embodiment of the present invention,
Figure 5 is a plan view partly cut away showing a radiation image sensor in accordance with a fourth embodiment of the present invention,
Figure 6 is a cross-sectional view showing a radiation image sensor in accordance with a fifth embodiment of the present invention, and
Figure 7 is a cross-sectional view showing a radiation image sensor in accordance with a sixth embodiment of the present invention.

### DESCRIPTION OF THE PREFERRED EMBODIMENTS

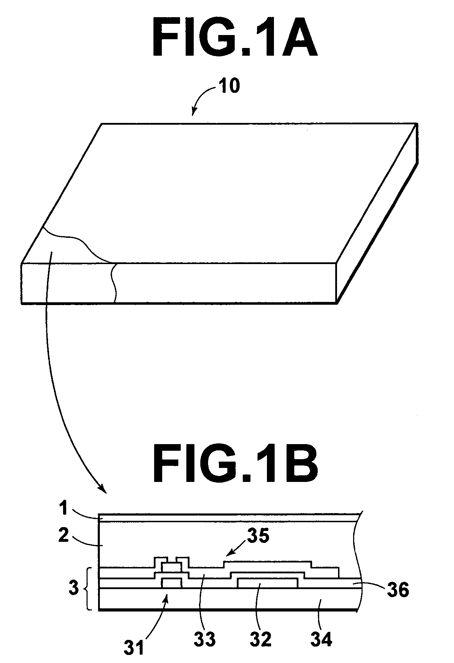

In Figures 1A and 1B, a radiation image sensor 10 of a first embodiment of the present invention comprises an electrode layer 1 permeable to recording radiation, a radiation detector layer 2 which generates electric charges upon exposure to radiation passing through the electrode layer 1 and an electric signal detector layer 3 which detects as an electric signal the electric charges generated in the radiation detector layer 2. The layers 1 to 3 are superposed in this order.

The radiation detector layer 2 comprises dispersion of radiation detector particles in polymer. The radiation detector particles may be of, for instance, HgI₂, PbI₂, Cd₁₋ₓZnₓTe, TIBr, PbO, Pb₂O₃, BiI₃ or BiGeO. The polymer may comprise, for instance, polyester, acrylic polymer or nylon polymer. Suitably the ratio of the radiation detector particles is in the range of 1/5 to 1/100 by weight. Since being good in film-forming properties, the above listed polymer can form a radiation detector layer 2 in a small amount and can form a radiation detector layer 2 high in mechanical strength.

As shown in Figure 1B, the electric signal detector layer 3 comprises a number of detector elements 35, each of which comprises a TFT switch 31, a pixel capacity cell 32 and a pixel electrode 33, which are two-dimensionally arranged on a plastic substrate 34 . The TFT switch 31 is formed by an organic TFT, a ZnO TFT or a poly-Si TFT produced by low-temperature film forming. Also the pixel capacity cell 32 and the pixel electrode 33 are formed of material which can form film at low temperature. The pixel capacity cell 32 and the pixel electrode 33 form a capacitor together with an insulating layer 36. The plastic substrate 34 may be of polycarbonate, polyester, polyethylene naphthalate (PEN) or polyimide.

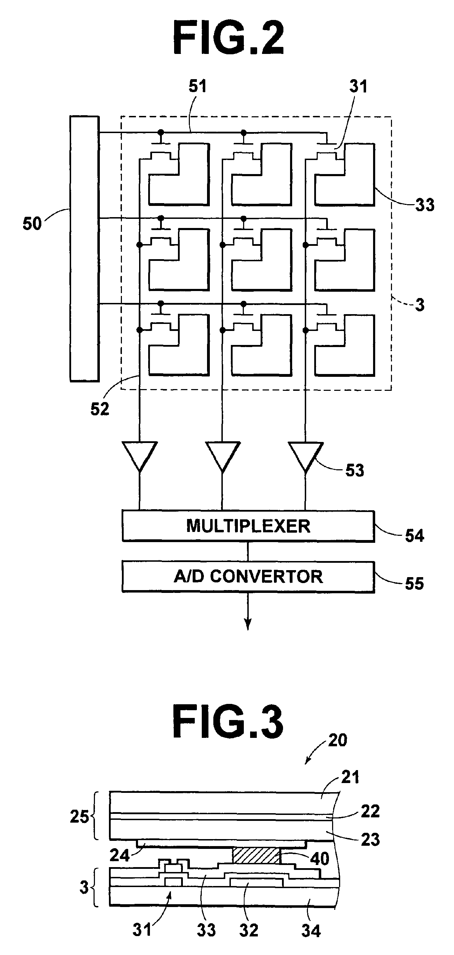

In Figure 2, electric charges generated in the radiation detector layer 2 upon exposure to radiation are stored in the capacitor formed by the pixel capacity cell 32, the pixel electrode 33 and the insulating layer 36. The TFT switch 31 is turned on and off by a control signal generated by a gate scanning line drive 50 by way of a gate scanning line 51, whereby electric charges stored in the capacitor connected to each TFT switch 31 are read out. The signal thus read out is output through a signal line 52, an amplifier 53, multiplexer 54 and an A/D convertor 55.

The radiation detector layer 2 may be formed on the surface of the electric signal detector layer by directly coating the surface of the electric signal detector layer with dispersion of radiation detector particles in polymer by the use of a blade coater, a slit coater or the like.

The electrode layer 1 is formed by vapor deposition, coating or the like of electrode material such as Al or Au on the surface of the radiation detector layer 2 formed by coating.

A radiation image sensor in accordance with a second embodiment of the present invention will be described, hereinbelow, with reference to Figure 3.

In Figure 3, the radiation image sensor 20 of the second embodiment comprises a radiation detector sheet 25 comprising a radiation detector layer 23 formed by coating with dispersion of radiation detector particles in polymer a plastic substrate 21 carrying thereon an electrode layer 22 permeable to recording radiation and an electric signal detector layer 3 which detects as an electric signal the electric charges generated in the radiation detector layer 23. The electric signal detector layer 3 is of the same structure as that employed in the first embodiment. The electric signal detector layer 3 and the radiation detector sheet 25 are laminated one on the other by way of conductive resin film 40.

The plastic substrate 21 of the radiation detector sheet 25 may be formed of the same material as the plastic substrate 34 employed in the first embodiment. The electrode layer 22 is formed by coating the plastic substrate 21 with conductive material. The plastic substrate 21 may be coated with the dispersion in the manner described above in conjunction with the first embodiment. A charge collector electrode 24 is provided on the surface of the radiation detector sheet 25 opposed to a pixel on the electric signal detector layer 3.

The conductive resin film 40 comprises conductive resin film fractions each provided on the surface of one of the pixel electrodes 33 of the electric signal detector layer 3 to electrically connect the pixel electrode 33 to the opposed charge collector electrode 24.

When producing a radiation image sensor 20 of this embodiment, the surface of the electric signal detector layer 3 is coated with photosensitive material which contains conductive material and can be patterned by photolithography and the photosensitive material is dried into film. Otherwise, film of photosensitive material containing therein photosensitive material is applied to the surface of the electric signal detector layer 3. Then conductive resin film 40 of a pattern opposed to a predetermined area of each pixel electrode 33 (formed by the conductive resin film fractions which are arranged in a pattern opposed to a predetermined area of each pixel electrode 33) is formed by photolithography.

The radiation detector sheet 25 is separately formed, and the radiation detector sheet 25 and the electric signal detector layer 3 are laminated by hot pressing with the conductive resin film fractions opposed to the corresponding pixel electrodes 33.

As can be understood from the description above, the radiation image sensors 10 and 20 of the first and second embodiments are free from a glass substrate and deposited film. Accordingly, the radiation image sensors 10 and 20 are highly resistant to impact and less apt to be broken when dropped. Further, the radiation image sensors 10 and 20 can be light in weight and can be produced at low cost.

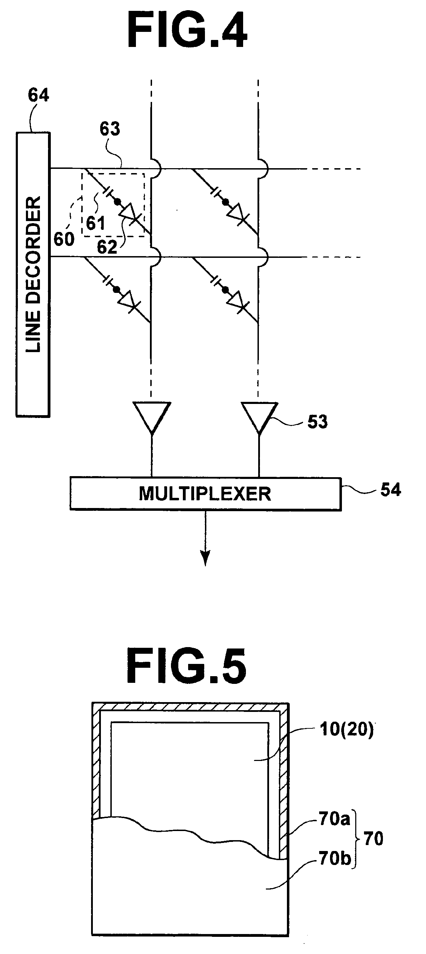

Though, in the first and second embodiments described above, the detector element 35 for detecting electric charges comprises a TFT switch 31, the detecting element need not be limited to such element but may comprise, for instance, a capacitor and a switching diode as shown in Figure 4. That is, the radiation image sensor in accordance with a third embodiment of the present invention shown in Figure 4 includes detector elements 60 each comprising a capacitor 61 and a switching diode 62. The electric charges stored in the capacitors 61 are read out as an electric signal by controlling the electric potential at a control line 63 by a line decoder 64, thereby controlling the switching diodes 62.

The structure of the electric circuit of the electric signal detector layer 3 need not be limited to those described above but may be various so long as it can be formed on a plastic substrate by low-temperature film forming.

The radiation image sensors 10 and 20 may be housed in a casing 70 formed of light-shielding material which is small in X-ray absorption. The casing 70 comprising a box-like body 70a open at its upper side and a lid 70b which closes the upper side of the body 70a. The lid 70b is removably mounted on the body 70a so that the radiation image sensors 10 (20) housed in the casing 70 can be changed.

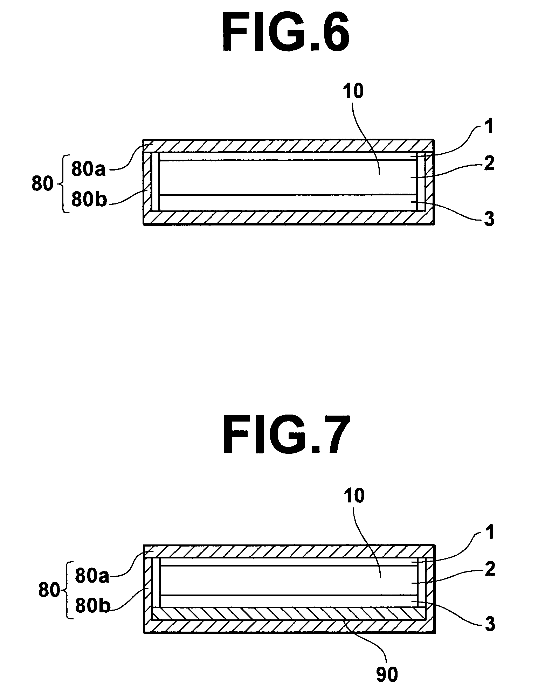

The radiation image sensor 10 in accordance with the first embodiment of the present invention can be integrated with a casing as shown in Figure 6. That is, the electrode layer 1 is formed on the surface of a lid 80a of a casing with the lid 80a used as the substrate.

Further, an X-ray absorbing layer 90 may be formed on the bottom of a casing body 80b to absorb radiation passing through a radiation image sensor 10 so that the radiation cannot affect another radiation image sensor as backscattered radiation. The X-ray absorbing layer 90 may be formed of Pb, W, Ta or compounds of these metals. The casing 70 shown in Figure 5 may be provided on the bottom of its body 70a with an X-ray absorbing layer.

## Claims

1. A radiation image sensor comprising
a radiation detector layer formed of radiation detector particles which generate electric charges upon exposure to recording radiation and are dispersed in a polymer, and
an electric signal detector layer formed of detector elements each of which is formed on the surface of a plastic substrate for each pixel to detect the electric charges generated at the corresponding pixel in the radiation detector layer,
wherein the radiation detector layer and the electric signal detector layer are laminated one on the other.

2. A radiation image sensor as defined in Claim 1 in which the radiation detector layer and the electric signal detector layer are laminated one on the other by way of conductive resin film partitioned for respective pixels.

3. A radiation image sensor as defined in Claim 1 or 2 in which the radiation detector particles are of HgI₂, PbI₂, Cd₁₋ₓZnₓTe, TIBr, PbO, Pb₂O₃, BiI₃ or BiGeO.

4. A radiation image sensor as defined in any one of Claims 1 to 3 in which the polymer comprises polyester, acrylic polymer or nylon polymer.

5. A method of producing a radiation image sensor defined in Claim 1 comprising the step of
forming the radiation detector layer by coating with dispersion of the radiation detector particles in polymer the side of the electric signal detector layer on which the detector elements are formed.

6. A method of producing a radiation image sensor as defined in Claim 2 comprising the steps of
forming conductive resin film on each of the detector elements on the electric signal detector layer and laminating the electric signal detector layer provided with conductive resin film on each of the detector elements on the radiation detector layer.
